# FASCICULE DE BREVET EUROPEEN

(11) **EP 0 478 427 B1**
(45) Date de publication et mention de la délivrance du brevet: **07.12.1994**
(21) Numéro de dépôt: 91402510.1
(22) Date de dépôt: 20.09.1991
(51) Int. Cl.: F16D 23/12

(54) **Dispositif de commande pour embrayage, notamment pour véhicules automobiles**
Kupplungssteuereinrichtung, insbesondere für Kraftfahrzeuge
Clutch control device, especially for motor vehicles

(30) Priorité: 25.09.1990 FR 9011810
(43) Date de publication de la demande: 01.04.1992
(73) Titulaire: VALEO, 75848 Paris Cédex 17 (FR)
(72) Inventeur: Lopez, Carlos, E-28005 Madrid (ES); Bacher, Michel, F-95580 Andilly (FR); Martinez, Corral, Madrid 27 (ES)
(74) Mandataire: Gamonal, Didier

(56) Documents cités:
- EP-A- 272 967
- EP-A- 322 265
- EP-A- 0 199 642
- FR-A- 405 789
- US-A- 2 521 607

## Description

La présente invention concerne un dispositif de commande pour embrayage, notamment de véhicules automobiles, selon le préambule de la revendication 1 et tel que décrit dans le document EP-A-0322 265.

Un tel dispositif forme un module unitaire. Il en est de même dans le document EP-A-0199 642 Dans ce document les moyens de commande sont logés à l'intérieur d'une cartouche rainurée formant tube-guide. Cette cartourche est rapportée à l'aide d'un flasque sur le carter de l'embrayage. La pièce menante consiste en une vis portée par la cartouche et la pièce menée en un écrou. Une telle disposition peut être mise en oeuvre dans tous les cas car l'arbre d'entrée de la boîte de vitesses ne peut traverser le système vis-écrou. Dans le document EP-A-322 265 la partie menée comporte à sa périphérie interne un flasque dirigé radialement vers l'axe de l'ensemble pour montage de l'organe d'action (une butée de débrayage) par l'intermédiaire d'une rondelle spécififique.

Une telle disposition complique le montage car l'organe d'action ne peut être monté par simple enfilage sur l'organe mené, lequel entoure l'organe d'action qui ne peut donc avoir dans tous les cas la taille désirée. En outre la disposition est relativement encombrante radialement.

Dans le document FR-A-405 789 est décrit un dispositif de commande d'un embrayage à friction comportant un manchon de commande soumis à l'action d'un levier à main. Ce manchon porte un filet de vis rapide et un filet de vis lent. Les vis tournent dans des écrous munis de butées à billes intervenant entre lesdits écrous et un manchon rotatif entraîné par un tambour moteur.

Les écrous sont fixes en rotation en sorte que toute rotation du manchon de commande, entourant le manchon rotatif, a pour effet de rapprocher ou d'écarter l'un de l'autre les écrous pour modifier la pression du plateau de l'embrayage à l'aide de tiges solidaires dudit plateau et associées à l'une des butées à billes.

Ce dispositif est compliqué et fait appel à deux filetages et à deux butées à billes. En outre le manchon rotatif n'est pas entraîné par le manchon de commande.

Dans le document US 2,521,607 est décrit une commande d'embrayage avec un arbre de commande d'embrayage soumis à l'action d'un levier de commande.

L'arbre est doté de filets venant en prise avec des manchons filetés et intervention de roulement entre ceux-ci et les parties rotatives de l'embrayages. Par rotation de l'arbre de commande on peut engager ou désengager l'embrayage.

Ce dispositif est également compliqué et fait appel à deux filetages et à des roulements à billes.

La présente invention a pour objet de pallier ces inconvénients et donc de créer un nouveau dispositif de commande d'encombrement radial réduit, simplifiant le montage de l'organe d'action, tout en ne limitant pas la taille radiale dudit organe d'action et en procurant d'autres avantages.

Ce problème est résolu, conformément à l'invention, par la partie caractérisante de la revendication 1.

Grâce à l'invention le montage de l'organe d'action peut se faire par simple enfilage axial, et la taille de celui-ci n'est pas limitée par l'organe mené. En outre, le dispositif est plus compact radialement et axialement. Le dispositif de commande peut donc convenir à plusieurs tailles d'organes d'action, la partie de montage constituant un nez de montage. L'organe menant est simplifié, en étant plus léger, et présente une inertie réduite ce qui permet d'améliorer la précision de commande dudit dispositif ainsi que son temps de réponse. Le support est également simplifié. En outre, cet organe menant peut être traversé par exemple par l'arbre d'entrée de la boîte de vitesse, aucun obstacle intérieur ne génant une telle traversée.

Grâce à l'invention le manchon de l'organe mené peut porter des moyens d'étanchéité propres à coopérer avec l'organe menant et le support peut comporter un boîtier fermé par un soufflet. Grâce à cette disposition l'organe menant et l'organe mené sont protégés contre la pénétration d'impuretés souillures ou analogues, en sorte que la durée de vie du dispositif de commande est augmentée.

Grâce à l'invention l'organe mené peut être lié en rotation au support par l'intermédiaire d'au moins une languette tangentielle de forme rectiligne compte tenu de la place libérée par l'organe menant. Il devient également possible d'employer des moyens de came à rampes hélicoïdales comportant des billes avec un dispositif de recirculation de celles-ci. Enfin ces moyens de came peuvent avoir une grande multitude de constitution et il en est de même des moyens de palier.

La description en annexe illustre l'invention, en référence aux dessins annexés dans lesquels :
- la figure 1 est une vue en coupe montrant le dispositif de commande selon l'invention monté sur la boîte de vitesses du véhicule automobile ;
- la figure 2 est une vue selon la flèche 2 de la figure 1 ;
- la figure 3 est une vue partielle selon la ligne 3-3 de la figure 2 ;
- la figure 4 est une vue à plus grande échelle, en coupe axiale, montrant le dispositif de commande de la figure 1 ;
- la figure 5 est une vue analogue à la figure 4 pour un deuxième exemple de réalisation ;
- la figure 6 est une vue analogue à la figure 4 pour un troisième exemple de réalisation ;
- la figure 7 est une vue de face selon la flèche 2 de la figure 1 montrant le support sans son soufflet ;
- la figure 8 est une vue en coupe selon la ligne 8-8 de la figure 1 ;
- les figures 9 et 10 sont des figures en développées montrant le dispositif de recirculation des billes selon la figure 4 ;
- les figures 11 à 14 sont des figures analogues à la figure 4 pour respectivement un quatrième, un cinquième, un sixième et un septième exemple de réalisation ;
- la figure 15 est une demi-vue en coupe axiale de la partie de montage pour un huitième exemple de réalisation ;
- la figure 16 est une vue partielle du premier manchon, selon la flèche 16 de la figure 15 ;
- la figure 17 est une vue développée du manchon de la figure 15.

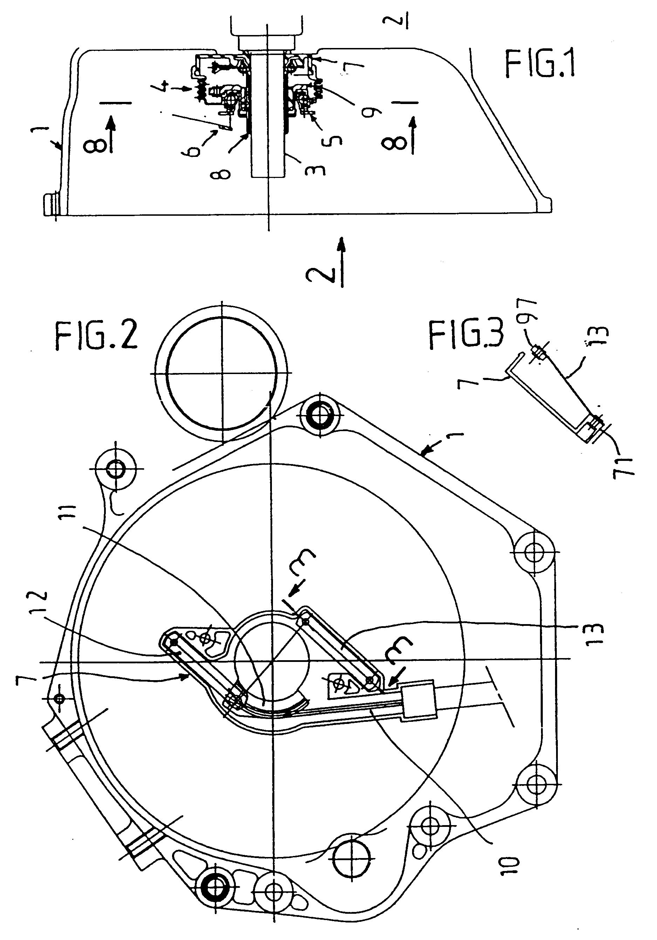

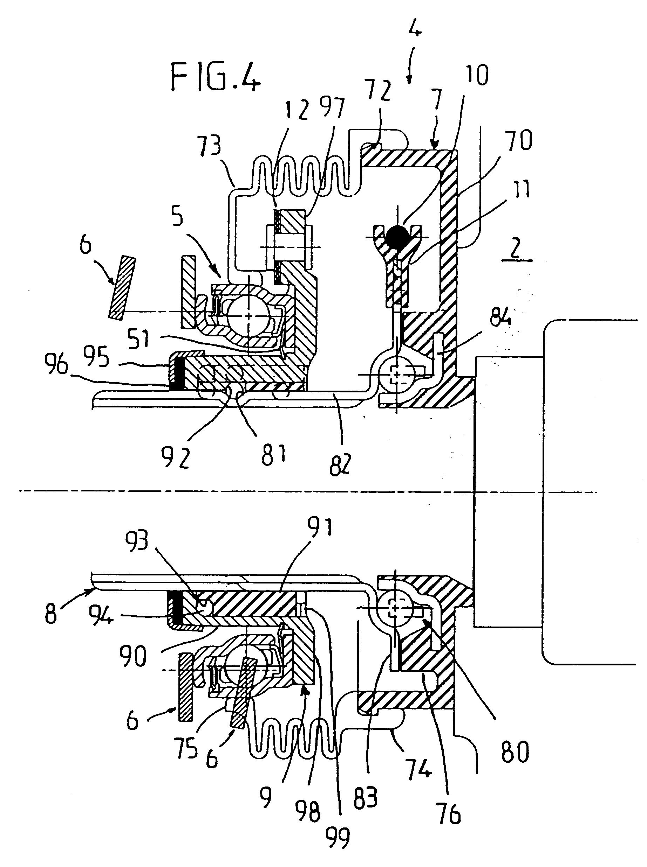

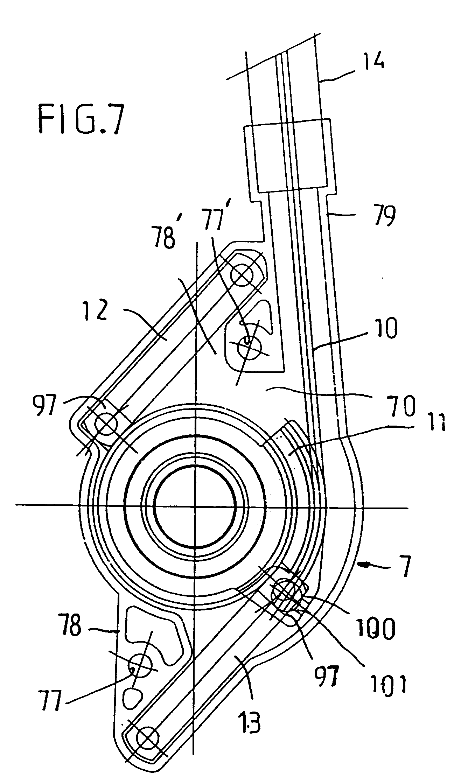

A la figure 1, on voit un dispositif de commande 4 pour véhicules automobiles comportant, pour la manoeuvre d'un organe d'action 5 destiné à agir sur le dispositif débrayeur 6 d'un embrayage, un support 7, un organe tubulaire menant 8, un organe tubulaire mené 9. L'organe d'action consiste ici en une butée de débrayage 5 propre à agir sur les extrémités des doigts d'un diaphragme 6 appartenant au dispositif débrayeur de l'embrayage, qui en variante peut comporter des leviers de débrayage et de ressorts hélicoïdaux, la butée 5 agissant alors sur lesdits leviers. Le support 7 consiste en un boîtier en matière plastique avec un fond 70 (figure 7) doté de deux oreilles de fixation 78,78' pourvues chacune d'un trou 77,77' pour passage de vis de fixation du boîtier 7 à la boîte de vitesses 2. On voit en 1 le carter de boîte de vitesses et en 3 l'arbre primaire mené de la boîte de vitesses pénètrant à l'intérieur de l'organe tubulaire 8 menant, propre à être soumis à l'action de moyens de commande comportant ici un câble 10 entouré par une gaine de guidage 14. Ce câble 10 pénètre à l'intérieur d'une partie tubulaire ou cheminée 79 que présente le boîtier 7, l'extrémité de la gaine 14 étant montée dans un épaulement que présente ladite cheminée 79 à cet effet (voir figure 7). L'organe menant 8, fixe en translation, présente (voir figures 4 et 7) une partie d'entraînement 11 sous forme d'un flasque transversal, sur lequel s'enroule le câble 10, ladite partie 11 présentant une rainure à l'extrémité de laquelle vient en prise une butée sertie 100 sur le câble comme décrit dans le document EP-A-0 322 265. Pour engagement de la butée 100, la partie 11 présente une rainure radiale d'engagement 101. L'organe menant 8 est monté mobile en rotation par rapport au support 7, par l'intermédiaire de moyens de palier 80 portés par ledit support. L'organe tubulaire mené 9, fixe en rotation, est monté mobile en translation par rapport au support, par l'intermédiaire de moyens de blocage en rotation 12,13 portés par le support 7. L'organe mené 9 est propre à agir sur l'organe d'action 5. Des moyens de came 92,81,94 à rampes hélicoïdales complémentaires sont prévus entre l'organe menant 8 et l'organe mené 9. L'organe mené 9 comporte une partie de montage 90,98 pour montage de l'organe d'action 5.

Suivant l'invention un dispositif de commande du type sus-indiqué est caractérisé en ce que la partie de montage 90,98 comporte un premier manchon 90, dit premier manchon, d'orientation axiale propre à pénétrer à l'intérieur de l'organe d'action 5 et à porter intérieurement une partie desdits moyens de came 81,92,94, en ce que l'organe menant 8 comporte un manchon, dit deuxième manchon 82, 182, pénètrant à l'intérieur dudit manchon 90 en portant l'autre partie desdits moyens de came, en ce que le premier manchon 90 porte extérieurement en saillie un premier flasque transversal 98 propre, d'une part, à servir d'appui à l'organe d'action 5 et, d'autre part, à être lié en rotation au support 7 par l'intermédiaire desdits moyens de blocage en rotation 12, 13, et en ce que lesdits moyens de blocage en rotation 12, 13 interviennent entre ledit premier flasque 98 et le support 7.

Le flasque 98, dit ici par commodité premier flasque, s'étend donc radialement en direction opposée à l'axe de l'ensemble et la partie de montage 90,98 forme un nez de montage. L'organe menant 9 entoure à léger jeu l'arbre 3 en étant traversé axialement par celui-ci. Sa dimension dépend donc de celle de l'arbre 3.

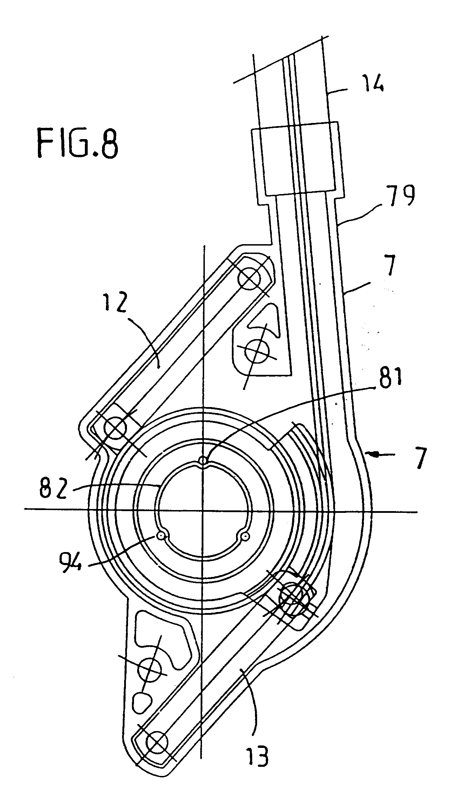

Dans les figures 4,5,6, et 11 à 15 la partie de montage de forme annulaire a globalement en section la forme d'un L inversé, le premier flasque 98 étant d'un seul tenant avec le manchon 90 d'orientation axiale (figure 4) et portant à sa périphérie externe, en position diamétralement opposée, deux pattes 97. Ces pattes servent à la fixation d'au moins deux languettes jumelées 12,13, d'orientation tangentielle (voir figures 2,7 et 8). Ces languettes 12,13 sont rectilignes et non courbées comme celles du document EP-A-0 322 265. Elles sont fixées à chacune de leurs extrémités, ici par rivetage, respectivement à une patte 97 et à un plot de fixation 71 (figure 3) du boîtier 7. Bien entendu la fixation peut être effectuée par vissage ou analogue.

Ces languettes 12,13 sont élastiques et s'étendent en direction opposée parallèlement l'une à l'autre, perpendiculairement à un diamètre passant par les pattes 97 et de part et d'autre dudit diamètre. Les points de fixation 71 sont formés dans les oreilles 78,78', qui sont entaillées pour passage des languettes 13. Cette disposition est rendue possible grâce à l'invention et du fait notamment que l'organe menant 9 pénètre à l'intérieur du premier manchon 90. Grâce à ceci l'organe mené 9 est fixe en rotation et les languettes 12,13 travaillent dans d'excellentes conditions en ayant une grande longueur, qui leur permet d'exercer une charge de rappel précise.

A la figure 4, les pattes 97 sont légèrement décalées axialement par rapport à la partie principale du flasque 98. Ici une seule languette 12 et une seule languette 13 est prévue mais bien sur on peut prévoir une superposition de plusieurs languettes pour chaque jeu 12 et 13. Ces languettes, comme visible à la figure 3, sont inclinées axialement et exercent une action de rappel axialement en direction du fond 70 du support 7. Ces languettes 12,13 rappellent également l'organe menant, par l'intermédiaire des moyens de came à rampes hélicoïdales complémentaires, axialement en direction du fond 70. L'organe menant 8 est ainsi en toutes circonstances fixe en translation. Le manchon 90 porte intérieurement une bague 91, ici en matière plastique à faible coefficient de frottement, ladite bague 91 étant d'épaisseur variable et étant dotée de trois renvois 93. La bague 91 est rapportée par sertissage (visible en 99 à la figure 4) sur le manchon 90 à l'aide de matière prélevée dans celui-ci. La bague 91 est ainsi emprisonnée entre l'épaulement formé par le sertissage 99 et un rebord radial dirigé vers l'axe de l'ensemble que présente le manchon 90 à son extrémité axiale opposée à celle portant le flasque 98 (figure 4). La bague 91 présente également trois portions de rampes hélicoïdales 93'.

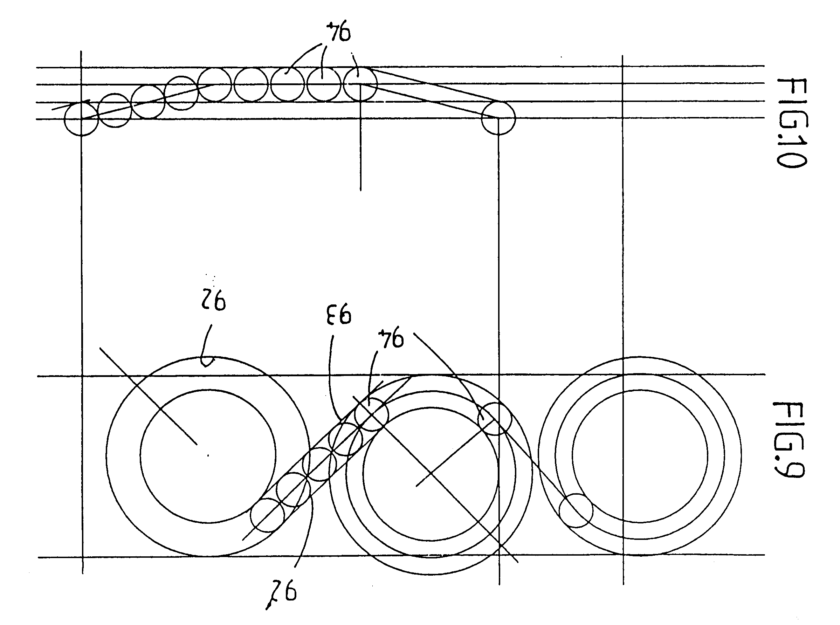

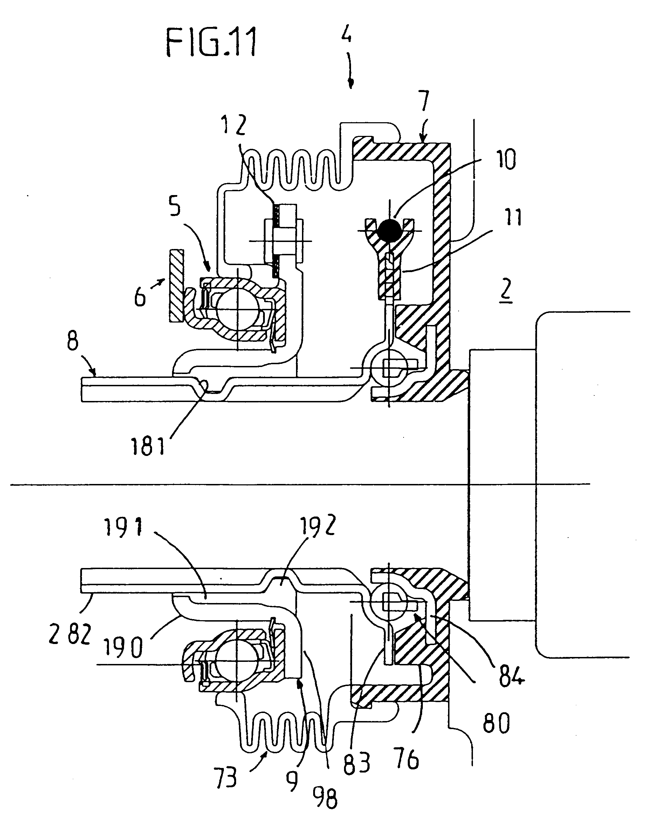

Le premier manchon 90 présente intérieurement, de manière complémentaire à la bague 91, également trois portions de rampes hélicoïdales 92' décalées axialement les unes par rapport aux autres, et trois renvois 92. Il est défini ainsi, entre ladite bague 91 et ledit manchon 90, un chenal pour circulation de billes 94 (figures 9 et 10). Le premier manchon 90, avec sa bague 91 et les billes 94, forme ainsi un manchon-écrou.

L'organe mené 9 forme lui un tube-vis avec un filetage hélicoïdal 81 en forme d'empreinte épousant la forme des billes 94. Ce filetage 81 est formé ici de trois portions décalées axialement les unes par rapport aux autres.

Ainsi qu'on l'aura compris il est formé un dispositif de recirculation des billes 94 (voir figures 9 et 10), les billes 94 coopérant avec le filetage 81 et les portions de rampes hélicoïdales 92',93', puis étant transférées dans les portions de renvoi 92,93 pour leur recirculation. Il est possible ainsi d'avoir un très grand nombre de billes, ce qui favorise un bon entraînement de l'organe mené 9 par l'organe menant 8.

Cet organe menant 8 tubulaire a lui aussi en section une forme globalement en L inversé avec un manchon 82 d'orientation axiale, dit ici par commodité second manchon, portant une partie des moyens de came, a savoir les portions de rampes hélicoïdales 81, et une partie globalement transversale 83, dite par commodité second flasque transversal, conformée, d'une part, pour coopérer avec les moyens de palier 80 et, d'autre part, pour porter la partie d'actionnement, à savoir le flasque 11. Ici les moyens de palier 80 comportent un roulement à billes à contact oblique et donc à action radiale et axiale. Le flasque 11 est ici surmoulé sur le deuxième flasque 83.

La bague intérieure 84 de ce roulement est noyée dans une surépaisseur 76 que présente en saillie le fond 70, tandis que la bague extérieure de ce roulement est formée dans le flasque 83. On notera, pour étanchéité du roulement 80, qu'un passage radial étroit existe entre la périphérie externe du flasque 83 et la surépaisseur 76 et que la pièce menante peut être en tôle emboutie comme également le premier manchon 90 et le premier flasque 98. Le boîtier 7 est simplifié et est dépourvu intérieurement de manchon. Le flasque 11 est monté à chevauchement sur le second flasque 83 en étant parallèle au premier flasque 98. Comme mieux visible à la figure 4, le second flasque 11 s'étend radialement en-deçà de la périphérie externe des pattes 97, lesdits flasques étant parallèles entre eux et s'étendant radialement en direction opposée à l'axe de l'ensemble.

Le manchon 90 porte à son extrémité libre (celle opposée au flasque 98), un joint d'étanchéité 96 rapporté sur ledit manchon 90 à l'aide d'une bague 95 en forme d'équerre emmanchée à force sur la périphérie externe du manchon 90. La bague 95 permet un emprisonnement du joint 96 propre à coopérer à étanchéité intérieurement avec le manchon 82. Une étanchéité parfaite est ainsi obtenue à ce niveau.

L'organe d'action est une butée de débrayage du type de celle décrit dans le document EP-0272 967 correspondant au document FR-A-2 607 885. Cette butée comporte donc une bague intérieure tournante profilée pour coopérer avec les doigts du diaphragme 6 et une bague extérieure non tournante avec un rebord radial dirigé vers l'axe de l'ensemble et propre à coopérer avec le premier flasque 98. Une rondelle élastique à action axiale 51 est montée entre ledit rebord radial de la bague externe et la tranche de la bague interne. Cette rondelle a une forme de dièdre et présente au moins une patte par laquelle elle est adaptée à prendre appui sur un épaulement formé à la faveur d'une gorge (figure 4) pratiquée dans le manchon 90 pour sollicitation du rebord radial de la bague tournante en direction du flasque 98. Pour plus de précisions on se reportera au susmentionné document sachant que le montage se fait par simple enfilage axial de la butée 5 sur le manchon 90 dirigé en direction opposée au fond 70 pour formation d'un nez de montage. Cette butée est donc ici du type à autocentrage maintenu. Bien entendu on peut également utiliser les dispositions décrites dans le document FR-A-1 467 848 à bague extérieure tournante (figures 2 et 3) et dans le document EP-A-0272 967 (figure 7). La partie de montage peut donc avoir en section une forme de U comme à la figure 7 du susmentionné document EP-A-0272 967. En variante la bague intérieure peut être fixe et être emmanchée à force sur le manchon 90, qui présente alors un décrochement pour logement de la pièce 95, la bague extérieure étant tournante. Quoiqu'il en soit dans tous les cas le montage de la butée 5 est simplifié par rapport aux solutions décrites dans le susmentionné document EP-A-0 322 265 et peut être réalisé par enfilage axial, plusieurs tailles de butées pouvant être montées sur la partie de montage de l'organe mené 9.

Le boîtier support 7, avec un fond 70 dans lequel sont pratiquées les oreilles 78,78' et un rebord périphérique d'orientation axiale dirigé à l'opposé de la boîte de vitesses 2, est fermé avantageusement par un soufflet 73 grâce à l'invention qui laisse axialement et radialement de la place disponible. Pour ce faire l'extrémité libre du rebord périphérique du boîtier 7 présente un cran 72 sur lequel vient s'emmancher l'extrémité 74 du soufflet doté d'une gorge pour s'accrocher sur ledit cran 72. Ce soufflet 73 s'étend au-dessus du premier flasque 98 et des pattes 97 pour présenter un retour terminal 75 d'orientation axiale propre à coopérer avec la périphérie externe de la bague externe non tournante de la butée 5. Lorsque la bague externe est tournante le retour 75 coopère alors avec la périphérie externe du flasque 98 ou un retour annulaire d'orientation axiale solidaire de celui-ci.

On notera que les deux extrémités 74,75 s'étendent parallèlement l'une à l'autre en étant décalées radialement, le boîtier 7 entourant quant à lui le flasque 11 et le câble 10.

On appréciera que le dispositif de commande 4 selon l'invention forme un ensemble unitaire bien protégé contre la pénétration d'impuretés, souillures ou analogues à l'intérieur de celui-ci.

A la figure 4 on a représenté les diverses configurations qu'occupe le diaphragme 6 lors de sa durée de vie sachant que l'embrayage est du type poussé et qu'il faut donc pousser à l'aide de l'organe d'action 5 sur les extrémités des doigts du diaphragme 6 afin de desserrer les garnitures du disque de friction, normalement serrées entre le plateau de pression et de réaction de l'embrayage (non représenté).

Pour débrayer il suffit donc d'entraîner l'organe menant 8, ici léger, en rotation à l'aide du câble 10 pour entraîner, grâce aux moyens de came à rampes hélicoïdales et à billes 94, l'organe mené 9 en translation et agir en poussée sur le diaphragme 6.

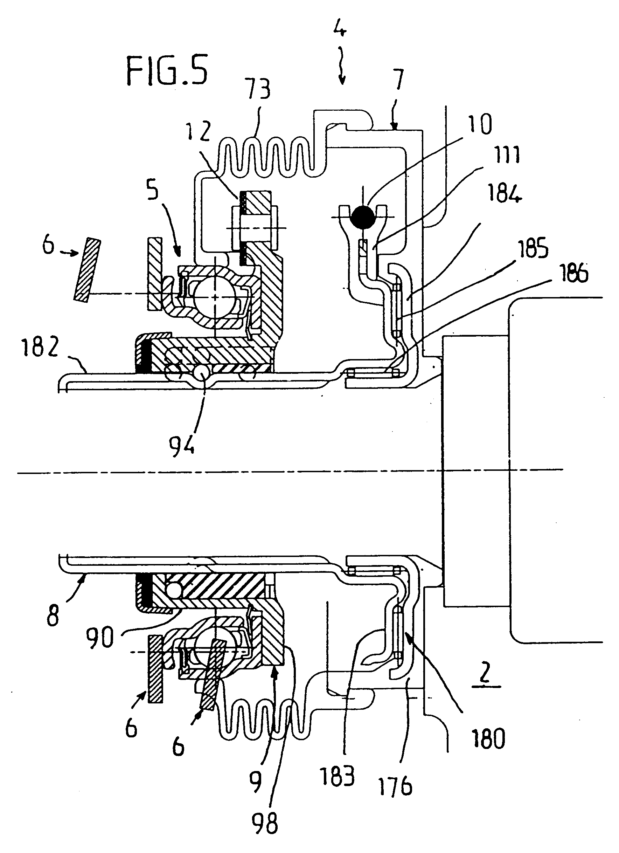

On appréciera que l'inertie du dispositif est diminuée et qu'également la disposition selon l'invention libère de la place axialement entre le premier et le second flasque. Ainsi suivant la figure 5, les moyens de palier 180 peuvent consister en deux séries de roulement à aiguille 185,186, le roulement 185 étant destiné à encaisser les charges axiales, tandis que le roulement 186 est destiné à encaisser les charges radiales. Dans ce cas la pièce 184 ancrée dans l'épaisseur 176 du support 7 est conformée pour offrir des chemins de roulement aux roulements 185,186, et il en est de même du second flasque 183 et du deuxième manchon 182 conformés pour recevoir respectivement le roulement 185 et le roulement 186. Le deuxième flasque 183 a donc une forme tortueuse, ledit flasque 183 présentant une extrémité externe décalée axialement en direction opposée au fond 70 pour montage par chevauchement du flasque 111 servant de guide au câble 10. Cette disposition permet de ne faire appel qu'à une languette 12 ou 13 pour la liaison en rotation de l'organe mené. Cette languette peut alors suivant la place disponible, s'étendre dans le prolongement du câble 10 et de la cheminée 79.

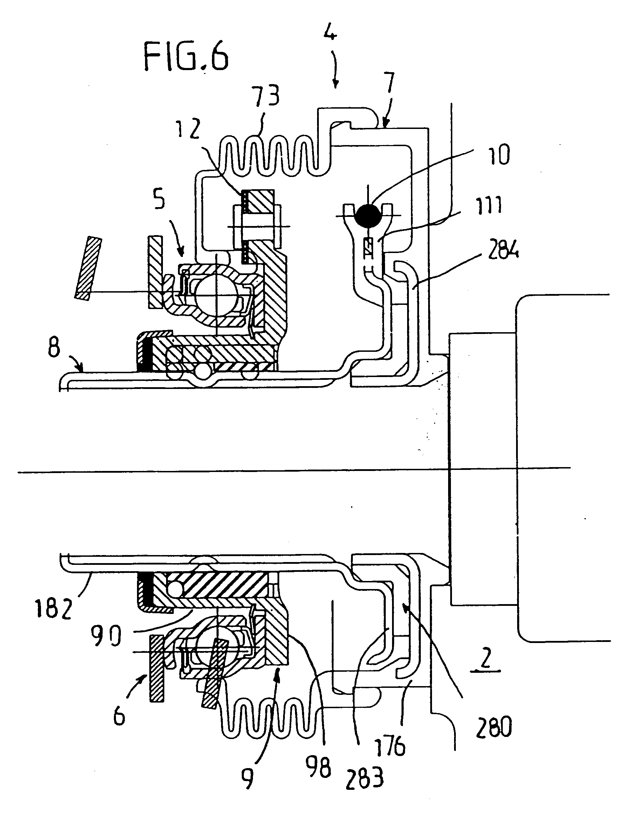

A la figure 6 au lieu de prévoir deux séries de roulement on peut remplacer ceux-ci par un palier en matériau anti-friction 280 annulaire globalement à section en forme de L inversé monté entre une pièce 284 ancrée dans le support 7 et le second flasque 283.

L'invention ouvre un grand nombre de possibilités en ce qui concerne les moyens de came à rampes hélicoïdales complémentaires. Ainsi à la figure 11 lesdits moyens de came à rampes hélicoïdales consistent en des saillies hélicoïdales 192, décalées axialement les unes par rapport aux autres, portées par une pièce 191 solidaire du premier manchon 190, l'organe mené 9 offrant en complément des rainures hélicoïdales 181 pour coopération avec les saillies 192. La pièce 191 est en matériau anti-frottement telle que la matière plastique surmoulée sur le premier manchon 190, qui forme ainsi un manchon-écrou bi-composant, le deuxième manchon 282 de l'organe menant 8 formant un tube-vis pour recevoir les saillies 192 à section trapézoïdale. Ainsi à la figure 11 il y a plusieurs saillies 192 et rainures complémentaires 181 comme à la figure 4, mais bien entendu il est possible d'avoir une seule saillie et une seule rainure suivant l'angle d'enroulement de l'hélice.

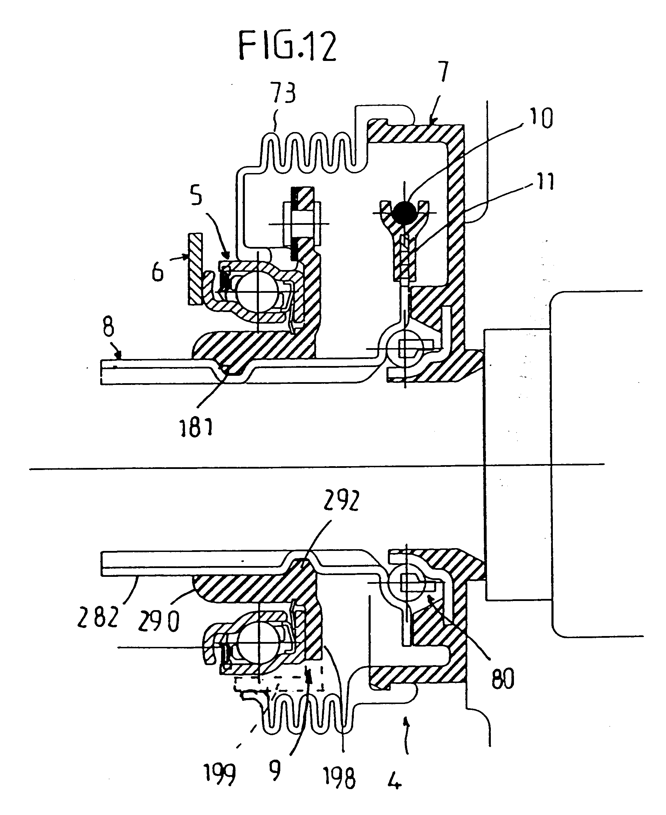

A la figure 12 le premier manchon-écrou 290 est en matière plastique, à faible coefficient de frottement, et c'est lui-même qui comporte les saillies 292 engagées toujours dans des rainures complémentaires 181 de l'organe menant 8 métallique.

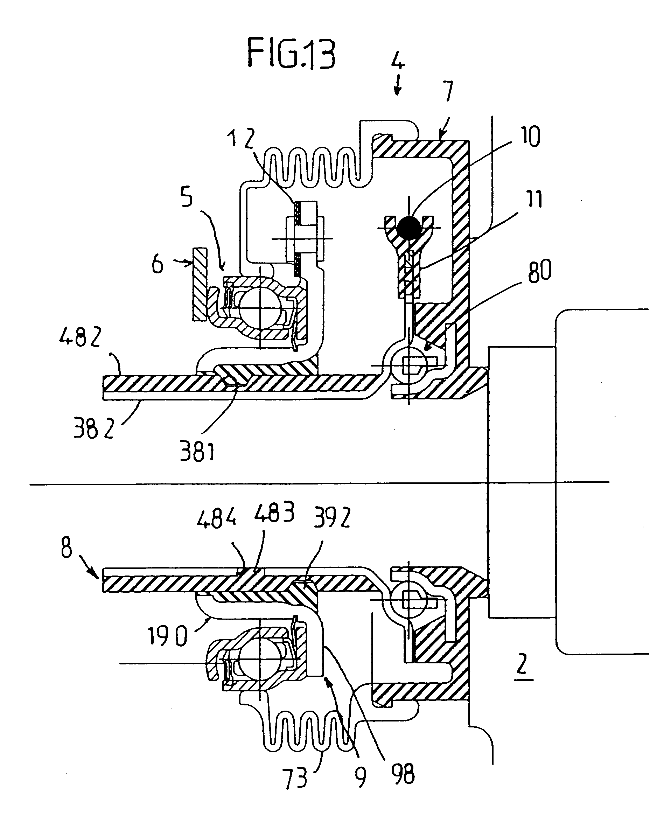

A la figure 13 le deuxième manchon 382 métallique porte une bague 482 en matière plastique, à faible coefficient de frottement, dans laquelle sont pratiquées les rainures hélicoïdales 381. Le premier manchon 190 portant alors, comme à la figure 11, une pièce en matière plastique, à faible coefficient de frottement, avec des saillies 392 propres à coopérer avec les rainures 381. La bague 482 porte des tétons 483 engagés dans des trous 484 du manchon 382 pour son immobilisation.

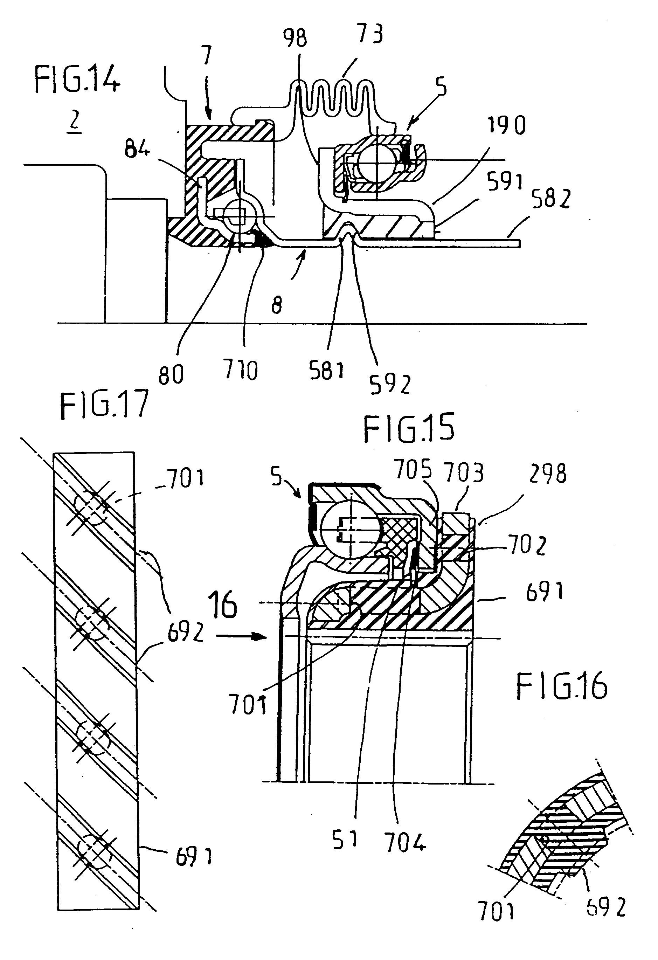

A la figure 14 les structures sont inversées par rapport à la figure 11, le deuxième manchon 582 portant des saillies 581 décalées axialement les unes par rapport aux autres, en forme de rampes hélicoïdales propres a s'engager dans des rainures complémentaires 592 portées par une bague 591 solidaire du premier manchon 190. En pratique dans cette figure, il est prévu plusieurs rainures 592 et saillies 581 mais bien entendu il est possible suivant l'angle d'enroulement de l'hélice d'avoir une saillie et une rainure.

Bien entendu la présente invention n'est pas limitée aux exemples de réalisation décrits, en particulier au lieu d'un câble de commande 10 on peut utiliser comme dans le susmentionné document EP-A-0 322 365 (figure 11) une tige commandée en déplacement par un vérin hydraulique et agissant sur le premier flasque. En variante on peut utiliser un moteur électrique entraînant par un dispositif d'engrenage la pièce menante.

Le premier flasque peut porter deux tenons propres à s'engager chacun dans une rainure du flasque 7 pour liaison en rotation avec celui- ci.

Alors qu'à la figure 4 un passage étroit existe également entre la pièce 84 et le deuxième manchon 82 pour étanchéité du roulement 80, on peut prévoir (figure 14) un joint d'étanchéité 71O entre ladite pièce 84 et le deuxième manchon 582. La partie de montage peut avoir une section en forme de U notamment lorsqu'elle est en matière plastique, comme visible dans la partie basse de la figure 12 en pointillés. Dans ce cas le flasque 198 présente à sa périphérie externe un retour axial 199 entourant la bague externe de la butée 5. Le soufflet coopère alors avec ledit rebord 199.

La partie de montage peut être bi-matière comme a la figure 11 mais avec une partie métallique tubulaire 703, à section en forme de L inversé, noyée dans une partie 691 tubulaire en matière plastique. La partie 703 comporte donc, à l'une de ses extrémités axiales, un flasque transversal noyé dans une partie transversale de la partie 691 également à section en forme de L inversé à l'image de la partie 703. Pour ce faire (figures 15 à 17), des canaux de communication 701,702 sont pratiqués respectivement dans la portion axiale et radiale de la partie 703. Ainsi, la matière plastique peut traverser la partie métallique 703 et venir noyer celle-ci. Ainsi la partie métallique, contrairement à la réalisation de la figure 11, n'a pas besoin d'être usinée pour formation de la gorge 704 pour montage la rondelle 51 sollicitant le rebord radial 705 de la bague externe de la butée 5 au contact du premier flasque 298 revêtu de matière plastique. Les saillies 692 s'obtiennent également aisément. Ici quatre saillies 692 décalées axialement les unes par rapport aux autres sont prévues, lesdites saillies 692 étant en forme d'hélice à section trapézoïdale pour formation d'une partie des moyens de came à rampes hélicoïdales selon l'invention. Grâce à cette disposition le rebord radial 705 est en contact avec de la matière plastique et il n'y a pas besoin de pratiquer de gorge dans la partie métallique, tout en ayant des saillies en matière plastique.

Le premier flasque 98 peut être rapporté par exemple par surmoulage, soudage ou sertissage sur le premier manchon au lieu d'être d'un seul tenant avec celui-ci, comme dans les figures représentées. Ainsi, le premier manchon 90 peut être en matière synthétique et le premier flasque 98 métallique en étant rapporté par surmoulage sur ledit premier manchon.

Enfin les languettes 12,13 peuvent s'étendre d'un même côté de la ligne reliant les pattes 97.

## Revendications

1. Dispositif de commande pour embrayage, notamment de véhicules automobiles, du genre comportant, pour la manoeuvre d'un organe d'action (5) destiné à agir sur le dispositif débrayeur (6) d'un embrayage, un support (7), pour fixation dudit dispositif de commande (4) sur une partie fixe (2), un organe tubulaire menant (8), fixe en translation, propre à être soumis à l'action de moyens de commande (10,14) et monté mobile en rotation par rapport au support (7) par l'intermédiaire de moyens de palier (80,180...) portés intérieurement par ledit support, un organe tubulaire mené (9), qui est monté mobile en translation et fixe en rotation par rapport au support (7) par l'intermédiaire de moyens de blocage en rotation (12,13) portés par ledit support, ledit organe mené (9) étant propre à agir sur l'organe d'action (5) et, entre l'organe menant (8) et l'organe mené (9), des moyens de came à rampes hélicoïdales complémentaires (92,81,94), dans lequel l'organe mené (9) comporte une partie de montage (90,97,98...) pour montage de l'organe d'action (5), caractérisé en ce que la partie de montage (90,97,98...) comporte un manchon (90,190...), dit premier manchon, d'orientation axiale propre à pénétrer à l'intérieur de l'organe d'action (5) et à porter intérieurement une partie desdits moyens de came (81,92,94...), en ce que l'organe menant (8) comporte un manchon (82,182), dit deuxième manchon, pénètrant à l'intérieur dudit premier manchon en portant l'autre partie desdits moyens de came, en ce que le premier manchon (90) porte extérieurement en saillie un premier flasque transversal (98) propre, d'une part, à servir d'appui à l'organe d'action (5) et, d'autre part, à être lié en rotation au support (7) par l'intermédiaire desdits moyens de blocage en rotation (12,13), et en ce que lesdits moyens de blocage en rotation (12,13) interviennent entre ledit premier flasque (98) et le support (7).

2. Dispositif selon la revendication 1, caractérisé en ce que l'organe menant (8) est en tôle emboutie et a globalement en section la forme d'un L inversé avec son deuxième manchon (82,182...) portant un second flasque transversal (83,183...) s'étendant parallèlement au premier flasque (98), radialement en direction opposée à l'axe de l'ensemble, ledit second flasque étant conformé, d'une part, pour coopérer avec les moyens de palier (80,180...) et, d'autre part, pour porter une partie d'actionnement propre à coopérer avec les moyens de commande (10).

3. Dispositif selon la revendication 2, dans lequel le support (7) comporte un boîtier creux (7) en matière plastique avec un fond (70), caractérisé en ce que les moyens de palier (80,180,280) sont portés intérieurement par une pièces (84,184,284) ancrée dans une surépaisseur (76,176) que présente en saillie le fond (70) du boîtier (7).

4. Dispositif selon la revendication 3, caractérisé en ce que, pour étanchéité des moyens de palier (80,180,280), un passage étroit existe entre ladite surépaisseur (76,176) et le second flasque (83).

5. Dispositif selon l'une des revendications 1 à 4, cactérisé en ce que le premier manchon (90,190...) porte à son extrémité libre du côté opposé au premier flasque (98) des moyens d'étanchéité propres à coopérer à étanchéité avec le second manchon (82,182...).

6. Dispositif selon l'une quelconque des revendications 1 à 5, dans lequel le support (7) comporte un boîtier creux entourant la partie d'actionnement (11), caractérisé en ce que le boîtier (7) est fermé par un soufflet (73) monté sur le boîtier (7) et l'un des éléments organe d'action (5)-partie de montage (90,98,199) et en ce que le soufflet (73) s'étend au-dessus du premier flasque (98,198).

7. Dispositif selon la revendication 6, dans lequel le boîtier (7) présente un rebord périphériquqe d'orientation axiale et un fond (70), caractérisé en ce que le soufflet présente une extrémité (74) avec une gorge pour s'accrocher sur un cran (72) que présente l'extrémité libre du rebord périphérique du boîtier (7) et un retour (75) pour coopérer avec l'un des éléments oragne d'action (5)-partie de montage (90,98,199).

8. Dispositif selon la revendication 6 ou 7, dans lequel l'organe d'action (5) consiste en une butée de débrayage avec une bague externe au contact de la partie de montage (90,98-198,199), caractérisé en ce que le premier manchon (90-703,691) présente une gorge pour appui d'une rondelle élastique à action axiale (51) portée par la butée de débrayage (5) et propre a solliciter un rebord de la bague externe de la butée (5) en direction du premier flasque (98,703) et en ce que le retour (75) du soufflet est monté sur la bague externe de la butée de débrayage (5).

9. Dispositif selon l'une des revendications 1 à 8, caractérisé en ce que les moyens de blocage en rotation (12,13) consistent en au moins une languette (12,13) tangentielle de forme rectiligne fixée à une patte de fixation (97) portée par le premier flasque (98) et à un plot de fixation (71) du support (7).

10. Dispositif selon la revendication 9, caractérisé en ce que deux languettes jumelées (12,13) et deux pattes de fixation (97) sont prévues, en ce que les deux pattes de fixation (97) sont diamétralement opposées, en ce que lesdites languettes (12,13) s'étendent en direction opposée par rapport au diamètre de symétrie passant par les deux pattes de fixation (97), et en ce que le support (7) présente deux oreilles de fixation (78,78') au support fixe (1) entaillées pour passage desdites languettes (12,13).

11. Dispositif selon l'une quelconque des revendications 1 à 10, caractérisé en ce que les moyens de came à rampes hélicoïdales comportent des billes (94) montées dans une bague de renvoi (91) portée par le premier manchon (90) pour formation d'un dispositif de recirculation des billes.

12. Dispositif selon la revendication 11, caractérisé en ce que le deuxième manchon (82) présente des empreintes hélicoïdales (81) pour circulation des billes (94).

13. Dispositif selon l'une quelconque des revendications 1 à 10, caractérisé en ce que les moyens de came à rampes hélicoïdales comportent au moins une saillie hélicoïdale (192) solidaire du premier manchon (190) et une empreinte hélicoïdale complémentaire (181,381) portée par le deuxième manchon (182,282).

14. Dispositif selon l'une quelconque des revendications 1 à 5, caractérisé en ce que les moyens de came à rampes hélicoïdales comportent au moins une rainure hélicoïdale (592) portée par le premier manchon (190) et une saillie hélicoïdale complémentaire (581) portée par le second manchon (582).

15. Dispositif selon l'une quelconque des revendications précédentes, caractérisé en ce que la partie de montage comporte une partie métallique (703) tubulaire à section en forme de L inversé noyée dans une partie tubulaire en matière plastique (691) à section en forme de L inversé à l'image de la partie métallique 703, ladite partie en matière plastique portant une partie desdits moyens de came à rampes hélicoïdales, et en ce que des canaux de communications (701,702) sont ménagés dans la partie axiale et radiale de la partie métallique (703).

## Claims

1. A control mechanism for a clutch, especially for motor vehicles, of the kind comprising, for manoeuvring an actuating member (5) which is adapted to act on the declutching mechanism (6) of a clutch, a support member (7) for securing the said control mechanism (4) on a fixed part (2), a tubular driving member (8) which is fixed in translation and which is adapted to be subjected to the action of control means (10, 14), being mounted for rotating movement with respect to the support member (7) through bearing means (80, 180 ...) carried internally by the said support member, a tubular driven member (9) which is mounted for translational movement and fixed against rotation with respect to the support member (7) through anti-rotation means (12, 13) carried by the said support member, the said driven member (9) being adapted to act on the actuating member (5), and, between the driving member (8) and the driven member (9), camming means having complementary helical ramps (92, 81, 94) , wherein the driven member (9) has a mounting portion (90, 97, 98 ...) for carrying the actuating member (5), characterised in that the mounting portion (90, 97, 98 ...) includes a sleeve (90, 190 ...), referred to as a first sleeve, orientated axially and adapted to penetrate into the actuating member (5) and to carry internally a part of the said camming means (81, 92, 94 ...), in that the driving member (8) includes a sleeve (82, 182) referred to as the second sleeve, penetrating into the said first sleeve and carrying the other part of the said camming means, in that the first sleeve (90) carries an outwardly projecting first transverse flange (98) which is adapted, firstly to act as an abutment means for the actuating member (5), and secondly to be coupled in rotation to the support member (7) through the said anti-rotation means (12, 13), and in that the said anti-rotation means (12, 13) work between the said first flange (98) and the support member (7).

2. A mechanism according to Claim 1 , characterised in that the driving member (8) is a sheet metal pressing, and has a cross sectional shape which is generally in the form of an inverted L, with its second sleeve (82, 182 ...) carrying a second transverse flange (83, 183 ...) which extends parallel to the first flange (98) and radially away from the axis of the assembly, the said second flange being shaped, firstly for cooperation with the bearing means (80, 180 ...), and secondly for carrying an actuating portion adapted to cooperate with the control means (10).

3. A mechanism according to Claim 2, wherein the support member (7) comprises a hollow housing (7) of plastics material having a base (70), characterised in that the bearing means (80, 180, 280) are carried internally by a member (84, 184, 284) which is anchored in a projecting thickened portion (76, 176) of the base (70) of the housing (7).

4. A mechanism according to Claim 3, characterised in that, for sealing the bearing means (80, 180, 280), a narrow passage exists between the said thickened portion (76, 176) and the second flange (83).

5. A mechanism according to one of Claims 1 to 4, characterised in that the first sleeve (90, 190 ...) carries at its free end, on the side opposite to the first flange (98), sealing means adapted to cooperate sealingly with the second sleeve (82, 182 ...).

6. A mechanism according to any one of Claims 1 to 5, wherein the support member (7) comprises a hollow housing surrounding the actuating portion (11), characterised in that the housing (7) is closed by a bellows (73) which is mounted on the housing (7) and one of the elements comprising the actuating member (5) and the mounting portion (90, 98, 199), and in that the bellows (73) extends outside the first flange (98, 198).

7. A mechanism according to Claim 6, wherein the housing (7) has an axially orientated peripheral flange and a base (70), characterised in that the bellows has an end (74) with a groove for hooking on a lip (72) formed on the free end of the peripheral flange of the housing (7), and a turned-back portion (75) for cooperation with one of the elements comprising the actuating member (5) and the mounting portion (90, 98, 199).

8. A mechanism according to Claim 6 or Claim 7, wherein the actuating member (5) comprises a clutch release bearing having an outer ring in contact with the mounting portion (90, 98 - 198, 199), characterised in that the first sleeve (90 - 703, 691) has a groove for engagement with an axially acting resilient ring (51) carried by the clutch release bearing (5) and adapted to bias a flange of the outer ring of the release bearing (5) towards the first flange (98, 703), and in that the turned-back portion (75) of the bellows is mounted on the outer ring of the clutch release bearing (5).

9. A mechanism according to one of Claims 1 to 8, characterized in that the anti-rotation means (12, 13) comprise at least one tangential tongue (12, 13) of rectilinear form which is fixed to a securing lug (97) carried by the first flange (98), and to an anchor pin (71) of the support member (7).

10. A mechanism according to Claim 9, characterized in that two conjugate tongues (12, 13) and two securing lugs (97) are provided, in that the two securing lugs (97) are diametrically opposed, in that the said tongues (12, 13) extend away from the diameter of symmetry that passes through the two securing lugs (97), and in that the support member (7) has two fastening ears (78, 78') for fastening to the fixed support member (1), which are grooved for passage of the said tongues (12, 13).

11. A mechanism according to any one of Claims 1 to 10, characterised in that the camming means with their helical ramps include balls (94) which are mounted in an endless groove (91) carried by the first sleeve (90) so as to define a device for recirculation of the balls.

12. A mechanism according to Claim 11, characterised in that the second sleeve (82) has helical grooves (81) for circulation of the balls (94).

13. A mechanism according to any one of Claims 1 to 10, characterised in that the camming means with their helical ramps include at least one helical projection (192) fixed to the first sleeve (190) and a complementary helical groove (181, 381) carried by the second sleeve (182, 282).

14. A mechanism according to any one of Claims 1 to 5, characterized in that the camming means with their helical ramps include at least one helical groove (592) carried by the first sleeve (190), and a complementary helical projection (581) carried by the second sleeve (582).

15. A mechanism according to any one of the preceding Claims, characterised in that the mounting portion comprises a tubular metallic portion (703) having a cross section in the form of an inverted L and nested in a tubular portion (691), of plastics material having a cross section in the form of an inverted L matching that of the metallic portion (703), the said portion of plastics material carrying part of the said camming means having helical ramps, and in that communication channels (701, 702) are formed in the axial and radial parts of the metallic portion (703).

## Patentansprüche

1. Kupplungssteuereinrichtung, insbesondere für Kraftfahrzeuge, welche für die Steuerung eines Betätigungsorgans (5), das auf die Ausrückvorrichtung (6) einer Kupplung einwirkt, eine Halterung (7) für die Befestigung der Steuereinrichtung (4) an einem feststehenden Teil (2) umfaßt, sowie ein verschiebungsfestes rohrförmiges Antriebsorgan (8), auf das Steuermittel (10, 14) einwirken können und das drehbeweglich im Verhältnis zu der Halterung (7) anhand von innen an der Halterung (7) angeordneten Lagermitteln (80, 180...) angebracht ist, ein rohrförmiges angetriebenes Organ (9), das verschiebbar und drehfest im Verhältnis zu der Halterung (7) anhand von an der Halterung (7) angeordneten Drehsicherungsmitteln (12, 13) angebracht ist, wobei das angetriebene Organ (9) auf das Betätigungsorgan (5) einwirken kann, und zwischen dem Antriebsorgan (8) und dem angetriebenen Organ (9) angeordnete Nockenmittel mit dazu passenden spiralförmigen Rampen (92, 81, 94), wobei das angetriebene Organ (9) einen Einbauteil (90, 97, 98 ...) für den Einbau des Betätigungsorgans (5) umfaßt, **dadurch gekennzeichnet,** daß der Montageteil (90, 97, 98 ...) eine als erste Muffe bezeichnete axial ausgerichtete Muffe (90, 190 ...) umfaßt, die in das Innere des Betätigungsorgans (5) eindringt und die innen einen Teil der Nockenmittel (81, 92, 94 ...) trägt, daß das Antriebsorgan (8) eine als zweite Muffe bezeichnete Muffe (82, 182) umfaßt, die in das Innere der ersten Muffe eindringt und den anderen Teil der genannten Nockenmittel trägt, daß die erste Muffe (90) außen vorspringend einen ersten Querflansch (98) trägt, der einerseits als Auflage für das Betätigungsorgan (5) dient und andererseits über die Drehsicherungsmittel (12, 13) drehend mit der Halterung (7) verbunden ist, und daß die Drehsicherungsmittel (12, 13) zwischen dem ersten Flansch (98) und der Halterung (7) wirksam sind.

2. Einrichtung nach Anspruch 1 , **dadurch gekennzeichnet,** daß das Antriebsorgan (8) aus tiefgezogenem Blech besteht und im Querschnitt insgesamt eine umgekehrte L-Form mit seiner zweiten Muffe (82, 182 ...) aufweist, welche einen zweiten Querflansch (83, 183 ...) trägt, der sich parallel zu dem ersten Flansch (98), radial in entgegengesetzter Richtung zur Achse der Baugruppe erstreckt, wobei dieser zweite Flansch so gestaltet ist, daß er einerseits mit den Lagermitteln (80, 180 ...) zusammenwirkt und andererseits einen Betätigungsteil trägt, der mit den Steuermitteln (10) zusammenwirkt.

3. Einrichtung nach Anspruch 2, bei welcher die Halterung (7) ein hohles Gehäuse (7) aus Kunststoff mit einem Boden (70) umfaßt, **dadurch gekennzeichnet,** daß die Lagermittel (80, 180, 280) innen an einem Stück (84, 184, 282) angebracht sind, das in einem Wulst (76, 176) verankert ist, den der Boden (70) des Gehäuses (7) vorspringend aufweist.

4. Einrichtung nach Anspruch 3 , **dadurch gekennzeichnet,** daß zur Abdichtung der Lagermittel (80, 180, 280) ein schmaler Durchgang zwischen dem Wulst (76, 176) und dem zweiten Flansch (83) besteht.

5. Einrichtung nach einem der Ansprüche 1 bis 4, **dadurch gekennzeichnet,** daß die erste Muffe (90, 190 ...) an ihrem freien Ende gegenüber dem ersten Flansch (98) Dichtungsmittel trägt, die dicht mit der zweiten Muffe (82, 182 ...) zusammenwirken.

6. Einrichtung nach einem der Ansprüche 1 bis 5, bei der die Halterung (7) ein hohles Gehäuse umfaßt, das den Betätigungsteil (11) umgibt, **dadurch gekennzeichnet,** daß das Gehäuse (7) durch einen Balg (73) verschlossen ist, der an dem Gehäuse (7) und einem der Elemente Betätigungsorgan (5) - Einbauteil (90, 98, 199) angebracht ist, und daß sich dieser Balg (73) über dem ersten Flansch (98, 198) erstreckt.

7. Einrichtung nach Anspruch 6, bei der das Gehäuse (7) einen axial ausgerichteten Umfangsrand und einen Boden (70) aufweist , **dadurch gekennzeichnet,** daß der Balg ein Ende (74) mit einer Rille für das Einhaken an einer Raste (72), die an dem freien Ende des Umfangsrands des Gehäuses (7) vorgesehen ist, und einen Rücksprung (75) für das Zusammenwirken mit einem der Elemente Betätigungsorgan (5) - Einbauteil (90, 98, 199) aufweist.

8. Einrichtung nach einem der Ansprüche 6 oder 7, bei der das Betätigungsorgan (5) aus einem Ausrücklager mit einem an dem Einbauteil (90, 98-198, 199) anliegenden Außenring besteht, **dadurch gekennzeichnet,** daß die erste Muffe (90-703, 691) eine Rille für die Auflage einer axial wirksamen Federscheibe (51) aufweist, die auf dem Ausrücklager (5) angeordnet ist und einen Rand des Außenrings des Ausrücklagers (5) in Richtung des ersten Flansches (98, 703) beansprucht, und daß der Rücksprung (75) des Balgs auf dem Außenring des Ausrücklagers (5) angebracht ist.

9. Einrichtung nach einem der Ansprüche 1 bis 8, **dadurch gekennzeichnet,** daß die Drehsicherungsmittel (12, 13) aus mindestens einer tangentialen Zunge (12, 13) mit geradliniger Form bestehen, die an einer an dem ersten Flansch (98) vorgesehenen Befestigungsklammer (97) und an einem Befestigungsansatz (71) der Halterung (7) angebracht ist.

10. Einrichtung nach Anspruch 9 , **dadurch gekennzeichnet,** daß zwei Doppelzungen (12, 13) und zwei Befestigungsklammern (97) vorgesehen sind, daß sich die beiden Befestigungsklammern (97) diametral gegenüberliegen, daß sich die Zungen (12, 13) in entgegengesetzter Richtung zu dem Symmetriedurchmesser erstrecken, der durch die beiden Befestigungsklammern (97) verläuft, und daß die Halterung (7) zwei Ösen (78, 78') für die Befestigung an der feststehenden Halterung (1) aufweist, die für den Durchgang der Zungen (12, 13) vorgesehen sind.

11. Einrichtung nach einem der Ansprüche 1 bis 10, **dadurch gekennzeichnet,** daß die Nockenmittel mit spiralförmigen Rampen Kugeln (94) umfassen, die in einem an der ersten Muffe (90) vorgesehenen Umlenkring (91) angeordnet sind, um eine Kugelumlaufvorrichtung zu bilden.

12. Einrichtung nach Anspruch 11, **dadurch gekennzeichnet,** daß die zweite Muffe (82) spiralförmige Vertiefungen (81) für den Umlauf der Kugeln (94) aufweist.

13. Einrichtung nach einem der Ansprüche 1 bis 10, **dadurch gekennzeichnet,** daß die Nockenmittel mit spiralförmigen Rampen mindestens einen mit der ersten Muffe (190) verbundenen spiralförmigen Vorsprung (192) und eine dazu passende spiralförmige Vertiefung (181, 381) umfassen, die an der zweiten Muffe (182, 282) vorgesehen ist.

14. Einrichtung nach einem der Ansprüche 1 bis 5, **dadurch gekennzeichnet,** daß die Nockenmittel mit spiralförmigen Rampen mindestens eine an der ersten Muffe (190) vorgesehene spiralförmige Nut (592) und einen dazu passenden spiralförmigen Vorsprung (581) umfassen, der an der zweiten Muffe (582) vorgesehen ist.

15. Einrichtung nach einem der vorangehenden Ansprüche , **dadurch gekennzeichnet,** daß der Montageteil einen rohrförmigen Teil aus Metall (703) mit einem Querschnitt in umgekehrter L-Form umfaßt, der in einen rohrförmigen Teil aus Kunststoff (691) mit einem Querschnitt in umgekehrter L-Form in Entsprechung zu dem Metallteil (703) eingelassen ist, wobei der Kunststoffteil einen Teil der genannten Nockenmittel mit spiralförmigen Rampen trägt, und daß Verbindungskanäle (701, 702) in dem axialen und radialen Bereich des Metallteils (703) vorgesehen sind.
